(19) Europäisches Patentamt
European Patent Office
Office européen des brevets

(11) **EP 2 343 331 B1**

(12) **EUROPEAN PATENT SPECIFICATION**

(45) Date of publication and mention
of the grant of the patent:
**21.11.2012 Bulletin 2012/47**

(51) Int Cl.:
***C08J 5/18*** (2006.01)

(21) Application number: **10016172.8**

(22) Date of filing: **29.12.2010**

(54) **Fluororesin gasket sheet**

Dichtungsscheibe auf Fluorharzbasis

Feuille de fluororésine pour joint

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.01.2010 JP 2010000996**
**27.12.2010 JP 2010290053**

(43) Date of publication of application:
**13.07.2011 Bulletin 2011/28**

(73) Proprietor: **Nichias Corporation**
**Tokyo 105-8555 (JP)**

(72) Inventors:
• **Itoi, Katsutoyo**
**Tokyo 105-8555 (JP)**
• **Nagase, Yuuichiro**
**Tokyo 105-8555 (JP)**
• **Komatsu, Hisayuki**
**Tokyo 105-8555 (JP)**

(74) Representative: **Müller-Boré & Partner**
**Patentanwälte**
**Grafinger Straße 2**
**81671 München (DE)**

(56) References cited:
**EP-A1- 1 584 645      EP-A1- 2 168 998**
**JP-A- 2008 007 607**

**Description**

The present invention relates to a fluororesin sheet that may be used as a base material for gaskets used in a wide variety of fields such as petrochemical plants, industrial machines, vehicles, and household appliances, a method of producing a fluororesin sheet, and a sheet gasket.

A fluororesin gasket sheet is normally produced by mixing an inorganic filler into a fluororesin, and forming the mixture into a sheet. For example, the fluororesin gasket sheet is produced by mixing/preforming a fluororesin, an inorganic filler, and a processing aid including an organic compound (e.g., petroleum hydrocarbon solvent), repeatedly passing (rolling) the mixture between rolls at a given roll gap to obtain a sheet, and drying and calcining the sheet.

The fluororesin gasket sheet exhibits chemical resistance, heat resistance, and non-adhesive properties due to the fluororesin, and also exhibits improved creep resistance (i.e., a weak point of the fluororesin) due to the inorganic filler. Therefore, a sheet gasket obtained by punching the fluororesin sheet has been widely used as a sealing material for pipes and instruments used in a petroleum refining/petrochemical plant.

In recent years, use of the sheet gasket instead of an asbestos joint sheet has been studied due to the prohibition of the use of an asbestos joint sheet. Therefore, it has become necessary to improve the high-temperature stress relaxation properties and the seal-tightness of the sheet gasket.

JP-A-2008-7607 discloses a sheet gasket produced by processing a fluororesin sheet obtained by rolling a sheet-forming resin composition at a roll temperature of 40 to 80°C, the resin composition including a fluororesin, an inorganic filler containing 20 wt% or more of silica, and a processing aid containing 30 mass% or more of a petroleum hydrocarbon solvent (fractionation temperature: 120°C or less).

EP 2 168 998 A1 describes a fluororesin sheet for a gasket, a method for manufacturing the same, and a sheet gasket. EP 1 584 645 A1 describes polytetrafluoroethylen composites.

However, the inventors of the present invention found that the fluororesin sheet disclosed in JP-A-2008-7607 does not necessarily exhibit sufficient stress relaxation properties and seal-tightness.

In view of the above situation, an object of the present invention is to provide a fluororesin gasket sheet that includes an inorganic filler and exhibits excellent seal-tightness and excellent high-temperature stress relaxation properties, a method of producing a fluororesin gasket sheet, and a sheet gasket.

The inventors conducted extensive studies in order to achieve the above object, and found that a sheet gasket produced using a fluororesin sheet that includes an inorganic filler exhibits excellent high-temperature stress relaxation properties, but exhibits insufficient seal-tightness as the inorganic filler content in the fluororesin sheet increases. The inventors conducted extensive studies on a decrease in seal-tightness, and found that the processing aid is adsorbed by the filler when producing the sheet as the inorganic filler content in the fluororesin sheet increases (i.e., as the fluororesin content in the fluororesin sheet decreases) so that a large amount of processing aid remains in the rolled sheet. The inventors also found that voids are formed by removing the processing aid by drying the rolled sheet so that the seal-tightness deteriorates, and the adsorption amount of the processing aid increases when the inorganic filler has a small particle size so that the seal-tightness significantly deteriorates due to an increase in voids.

The inventors conducted further studies based on the above findings, and found that the above problems can be overcome by a fluororesin gasket sheet that includes a fluororesin and an inorganic filler, and has a fluororesin content of less than 60 vol% and a porosity of 13% or less. This finding has led to the completion of the present invention.

Specifically, the present invention provides the following.

(1) A fluororesin gasket sheet including a fluororesin and an inorganic filler, the inorganic filler being aluminum oxide, and the fluororesin gasket sheet having a fluororesin content of 43 to 55 vol%, an inorganic filler content of 45 to 57 vol% and a porosity of 13% or less.
(2) A method of producing a fluororesin gasket sheet including forming a mixture that includes a fluororesin, an inorganic filler, and a processing aid into a sheet-shaped product, and drying, compressing, and then calcining the sheet-shaped product.
(3) A sheet gasket obtained by processing the fluororesin gasket sheet according to (1).

According to the present invention, since the porosity of the fluororesin sheet is controlled to 13% or less during the production process, it is possible to provide a fluororesin gasket sheet that exhibits excellent high-temperature stress relaxation properties and sufficient seal-tightness even if the fluororesin content is less than 60 vol% (i.e., even if the inorganic filler content is relatively high), a method of producing the fluororesin gasket sheet, and a sheet gasket obtained by processing the fluororesin sheet.

A fluororesin gasket sheet (hereinafter may be referred to as "fluororesin sheet") according to one embodiment of the present invention is described below.

The fluororesin gasket sheet according to the present invention includes a fluororesin and an inorganic filler, the fluororesin gasket sheet having a fluororesin content of 43 to 55 vol% and a porosity of 13% or less.

A known fluororesin may be used as the fluororesin. Examples of such a fluororesin include a polytetrafluoroethylene (PTFE) resin, a modified PTFE, a tetrafluoroethylene-hexafluoropropylene copolymer (FEP), a tetrafluoroethylene-perfluoroalkyl vinyl ether copolymer (PFA), polychlorotrifluoroethylene (PCTEF), polyvinylidene fluoride (PVDF), polyvinyl fluoride (PVF), an ethylene-tetrafluoroethylene copolymer (ETFE), an ethylene-chlorotrifluoroethylene copolymer (ECTFE), and the like. It is preferable that the fluororesin include either or both of PTFE and a thermoplastic fluororesin having a melting point lower than that of PTFE.

Specific examples of PTFE and modified PTFE include 800-J, 810-J, 6-J, 62-J, 7-J, 7A-J, 70-J, and 170-J manufactured by DuPont-Mitsui Fluorochemicals Co., Ltd., and the like.

PTFE normally has a melting point of about $327 \pm 5°C$. Examples of the thermoplastic fluororesin having a melting point lower than that of PTFE include fluororesins (e.g., FEP, PFA, modified PTFE, and ETFE) having a melting point of lower than about $327 \pm 5°C$.

The melting point of PTFE and the melting point of thermoplastic fluororesin having a melting point lower than that of PTFE are measured in accordance with JIS K 6891 (tetrafluoroethylene resin powder testing method).

The stress relaxation properties can be further improved with a lower fluororesin content by utilizing the thermoplastic fluororesin having a melting point lower than that of PTFE as the fluororesin. It is conjectured that the thermoplastic fluororesin having a melting point lower than that of PTFE exhibits improved fluidity due to a decrease in viscosity during calcining, so that a dense sheet can be easily obtained.

The fluororesin sheet according to the present invention has a fluororesin content of 55 vol% or less, more preferably 54 vol% or less, and particularly preferably 52 vol% or less.

The fluororesin sheet according to the present invention has a fluororesin content of 43 vol% or more, more preferably 45 vol% or more, and still more preferably 48 vol% or more.

The inorganic filler is used for the fluororesin sheet according to the present invention in order to improve the stress relaxation properties.

The inorganic filler may generally be at least one inorganic filler selected from silicate minerals (clay) that include silicon and aluminum as the main component, and also include magnesium, iron, an alkaline earth metal, an alkali metal, or the like, natural minerals such as silica stone and wollastonite, oxides such as silica, alumina, glass, zircon, titanium oxide, and iron oxide, zirconium boride, sulfur-containing compounds such as molybdenum disulfide, barium sulfate, carbon, and the like. The fluororesin sheet generally includes either or both of aluminum oxide and silica stone as the inorganic filler. The fluororesin sheet according to the present invention includes aluminum oxide as the inorganic filler.

When the fluororesin sheet according to the present invention includes aluminum oxide as the inorganic filler, the fluororesin becomes fibrous when producing the fluororesin sheet so that the inside of the sheet is densified. This makes it possible to improve the tensile strength of the fluororesin sheet, and also improve the stress relaxation properties of the fluororesin sheet due to uniform distribution of the inorganic filler between the fibers.

The term "aluminum oxide" used herein refers to a material that includes $Al_2O_3$ in an amount of 90% or more. $\alpha$-Aluminum oxide, $\beta$-aluminum oxide, or $\gamma$-aluminum oxide may be used. It is preferable to use a-aluminum oxide due to chemical stability. Aluminum oxide may have a fibrous shape, a spherical shape, a plate-like shape, or an amorphous shape. Aluminum oxide having a fibrous shape is not suitable since voids (pores) tend to be formed. On the other hand, the fluororesin sheet can be densely filled with aluminum oxide having a spherical shape, a plate-like shape, or an amorphous shape. Since aluminum oxide exhibits excellent alkali resistance, and improves the seal-tightness and the tensile strength, aluminum oxide can be advantageously used as the inorganic filler.

The term "silica stone" used herein refers to a material that includes $SiO_2$ in an amount of 90% or more. For example, silica stone may include 96.85% of $SiO_2$, 1.55% of $Al_2O_3$, 0.1% of $Fe_2O_3$, 0.08% of $TiO_2$, 0.03% of CaO, 0.01% or less of MgO, 0.06% of $Na_2O$, 1.04% of $K_2O$, and 0.15% of other components.

The particle size of the inorganic filler is not particularly limited. For example, it is preferable that the inorganic filler have an average particle size of 2 to 30 $\mu$m, more preferably 2 to 20 $\mu$m, and still more preferably 3 to 15 $\mu$m.

The average particle size of the inorganic filler is measured using a laser diffraction particle size distribution analyzer.

The fluororesin sheet according to the present invention has an inorganic filler content of 45 vol% or more, still more preferably 46 vol% or more, and particularly preferably 48 vol% or more.

The fluororesin sheet according to the present invention has an inorganic filler content of 57 vol% or less, more preferably 55 vol% or less, and still more preferably 52 vol% or less.

Note that the inorganic filler content in the fluororesin sheet according to the present invention is expressed in "vol%" since the inorganic filler content differs to a large extent depending on the density of the inorganic filler when the inorganic filler content is expressed in "wt%". It is considered that the space formed by the inorganic filler is filled with the fluororesin so that a dense fluororesin sheet is formed. Therefore, it is considered that the physical size (volume) contributes to formation of a dense fluororesin sheet rather than weight.

The fluororesin sheet according to one embodiment of the present invention may include components (e.g., organic filler, inorganic fibers, and organic fibers) other than the fluororesin and the inorganic filler.

When the fluororesin sheet according to one embodiment of the present invention includes components other than the fluororesin and the inorganic filler, the total content of the components other than the fluororesin and the inorganic filler is preferably 50 vol% or less based on the total amount of the components included in the fluororesin sheet. Note that it is preferable that the fluororesin sheet according to one embodiment of the present invention does not include components other than the fluororesin and the inorganic filler (i.e., include only the fluororesin and the inorganic filler).

The thickness of the fluororesin sheet according to one embodiment of the present invention is not particularly limited, but may be about 4 to 10 mm (normally 1 to 3 mm), for example.

The fluororesin sheet according to the present invention has a porosity of 13% or less, more preferably 10% or less, more preferably 8% or less, and still more preferably 6% or less. The fluororesin sheet according to the present invention exhibits excellent seal-tightness when the fluororesin sheet has a porosity of 13% or less. It is preferable that the fluororesin sheet has as low a porosity as possible.

When regarding the seal-tightness as important, or regarding the balance between the stress relaxation properties and the seal-tightness as important, the porosity is preferably 2 to 10%, and more preferably 4 to 8%.

Note that the term "porosity" used herein refers to an index that indicates the content of voids (openings) formed in the fluororesin sheet. Therefore, the content (vol%) of the fluororesin and the inorganic filler is calculated without taking account of the content of voids.

The porosity is calculated by the following expression (2) using the theoretical sheet density calculated by the following expression (1) and the measured sheet density.

$$\text{Theoretical sheet density} = (\text{weight of fluororesin} + \text{weight of inorganic filler}) \,/$$

$$\{(\text{weight of fluororesin} \,/\, \text{density of fluororesin}) + (\text{weight of inorganic filler} \,/\, \text{density of inorganic filler})\} \qquad (1)$$

$$\text{Porosity (\%)} = \{(\text{theoretical sheet density} - \text{measured sheet density}) \,/\, \text{theoretical sheet density}\} \times 100 \qquad (2)$$

The fluororesin sheet according to one embodiment of the present invention preferably has a measured sheet density of 2.18 to 3.21 $g/cm^3$, and more preferably 2.20 to 3.15 $g/cm^3$. The above preferable range of the measured sheet density differs depending on the inorganic filler. For example, when using aluminum oxide as the inorganic filler, the measured sheet density of the fluororesin sheet is preferably 2.62 to 3.11 $g/cm^3$, and more preferably 2.70 to 2.85 $g/cm^3$. When using silica stone as the inorganic filler, the measured sheet density of the fluororesin sheet is preferably 2.22 to 2.29 $g/cm^3$, and more preferably 2.24 to 2.28 $g/cm^3$. When using clay as the inorganic filler, the measured sheet density of the fluororesin sheet is preferably 2.18 to 2.24 $g/cm^3$, and more preferably 2.20 to 2.23 $g/cm^3$. When using barium sulfate as the inorganic filler, the measured sheet density of the fluororesin sheet is preferably 2.93 to 3.21 $g/cm^3$, and more preferably 3.01 to 3.15 $g/cm^3$.

The sheet density of the fluororesin sheet is measured in accordance with JIS K 7112 (Plastics - Methods of determining the density and relative density of non-cellular plastics (Method A (water displacement method))).

When regarding the stress relaxation properties as important, or regarding the balance between the stress relaxation properties and the seal-tightness as important, the tensile strength of the fluororesin sheet according to one embodiment of the present invention is preferably 6 to 10 MPa, and more preferably 7 to 9 MPa. When regarding the seal-tightness as important, the tensile strength of the fluororesin sheet is preferably 7 to 11 MPa, and more preferably 8 to 10 MPa.

The tensile strength of the fluororesin sheet is measured in accordance with JIS K 7112 (Plastics - Determination of tensile strength (type 5 specimen)). The stress relaxation (the stress relaxation rate) of the fluororesin sheet is measured in accordance with JIS R 3453 (Methods of determining stress relaxation rate of compressed fiber jointing).

The fluororesin gasket sheet according to one embodiment of the present invention may suitably be produced by a production method according to one embodiment of the present invention.

According to the present invention, it is possible to provide a fluororesin gasket sheet that exhibits excellent high-temperature stress relaxation properties and sufficient seal-tightness even if the fluororesin content is less than 60 vol% (i.e., even if the inorganic filler content is relatively high).

A method of producing a fluororesin gasket sheet according to one embodiment of the present invention is described below.

The method of producing a fluororesin gasket sheet according to one embodiment of the present invention includes forming a mixture that includes a fluororesin, an inorganic filler, and a processing aid into a sheet-shaped product, and drying, compressing, and then calcining the sheet-shaped product.

In the method of producing a fluororesin gasket sheet according to one embodiment of the present invention, any of the fluororesins mentioned above in connection with the fluororesin gasket sheet may be used as the fluororesin.

In the method of producing a fluororesin gasket sheet according to one embodiment of the present invention, the fluororesin is preferably used in an amount of less than 60 vol%, more preferably 55 vol% or less, still more preferably 54 vol% or less, and particularly preferably 52 vol% or less, based on the total amount (=100 vol%) of the fluororesin and the inorganic filler.

The fluororesin is preferably used in an amount of 43 vol% or more, more preferably 45 vol% or more, and still more preferably 48 vol% or more, based on the total amount (=100 vol%) of the fluororesin and the inorganic filler.

In the method of producing a fluororesin gasket sheet according to one embodiment of the present invention, the inorganic filler is used to improve the stress relaxation properties. Any of the inorganic fillers mentioned above in connection with the fluororesin gasket sheet may be used as the inorganic filler.

In the method of producing a fluororesin gasket sheet according to one embodiment of the present invention, when using aluminum oxide as the inorganic filler, the content of aluminum oxide is preferably 15 to 100 vol%, more preferably 50 to 100 vol%, and still more preferably 100 vol%, based on the total amount of the inorganic filler.

When using aluminum oxide as the inorganic filler, the fluororesin becomes fibrous when producing the fluororesin sheet so that the inside of the sheet is densified. This makes it possible to improve the tensile strength of the fluororesin sheet, and also improve the stress relaxation properties of the fluororesin sheet due to uniform distribution of the inorganic filler between the fibers.

The particle size of the inorganic filler is not particularly limited. For example, it is preferable that the inorganic filler have an average particle size of 2 to 30 $\mu$m, more preferably 2 to 20 $\mu$m, and still more preferably 3 to 15 $\mu$m.

In the method of producing a fluororesin gasket sheet according to one embodiment of the present invention, since the raw material mixture is formed into a sheet, and compressed before calcining, the content of voids that may be easily formed when using an inorganic filler having a small average particle size can be adjusted. Therefore, an inorganic filler having a different particle size range can be used.

The average particle size of the inorganic filler is measured using a laser diffraction particle size distribution analyzer.

In the method of producing a fluororesin gasket sheet according to one embodiment of the present invention, the inorganic filler is preferably used in an amount of 40 vol% or more, more preferably 45 vol% or more, still more preferably 46 vol% or more, and particularly preferably 48 vol% or more, based on the total amount (=100 vol%) of the fluororesin and the inorganic filler.

In the method of producing a fluororesin gasket sheet according to one embodiment of the present invention, the inorganic filler is preferably used in an amount of 57 vol% or less, more preferably 55 vol% or less, and still more preferably 52 vol% or less, based on the total amount (=100 vol%) of the fluororesin and the inorganic filler.

The method of producing a fluororesin gasket sheet according to one embodiment of the present invention utilizes the processing aid (forming aid).

Examples of the processing aid include hydrocarbon organic solvents such as a paraffinic solvent. Specific examples of the processing aid include Isopar E, Isopar G, Isopar H, Isopar L, and Isopar M manufactured by Exxon Mobil Corp..

These processing aids may be used either individually or in combination. Note that a processing aid having a low flash point has safety problems, and may cause a change in the solvent content when forming the raw material mixture into a sheet. On the other hand, a processing aid having a high flash point makes it necessary to increase the drying time. Therefore, it is preferable to use Isopar G or Isopar H having a flash point of 40 to 60°C.

In the method of producing a fluororesin gasket sheet according to one embodiment of the present invention, the processing aid is preferably used in an amount of about 1 to 100 times, more preferably about 1 to 10 times, and still more preferably about 3 to 7 times the total volume of the fluororesin and the inorganic filler.

In the method of producing a fluororesin gasket sheet according to one embodiment of the present invention, a mixture that includes the fluororesin, the inorganic filler, and the processing aid is formed into a sheet-shaped product, and the sheet-shaped product is dried.

The mixture may be prepared by stirring (mixing) the fluororesin, the inorganic filler, and the processing aid using a mixer, for example. Unnecessary processing aid may be removed by filtration or the like after mixing.

The mixture may be formed into a sheet (sheet-shaped product) by rolling the mixture, extruding the mixture, or pressing the mixture using a press. These methods (processes) may be used in combination.

When rolling the mixture, the mixture is passed between two rolls a plurality of times while changing the roll gap to form a sheet. The roll gap is preferably set to about 0.2 to 10 mm. The fluororesin becomes fibrous as a result of rolling the mixture between the rolls a plurality of times, so that the inside of the sheet is densified. This increases the tensile strength of the sheet. The fluororesin can be advantageously caused to become fibrous when using aluminum oxide as the inorganic filler. This further increases the tensile strength of the sheet. Moreover, since the inorganic filler is uniformly distributed between the fibers, the stress relaxation properties of the sheet are improved. The roll temperature during rolling may be room temperature (i.e., 10 to 30°C). It is unnecessary to completely vaporize the processing aid during rolling.

The mixture may be rolled by repeating a process that includes rolling part of the mixture using a press or the like, stacking part of the mixture on the resulting rolled product, and rolling the laminate. This also makes it possible to obtain an excellent sheet-shaped product having high tensile strength.

The sheet-shaped product may be dried by heating the sheet-shaped product at a temperature equal to or less than the boiling point of the processing aid for 10 to 48 hours. The processing aid is removed by drying to obtain a dried sheet-shaped product.

In the method of producing a fluororesin gasket sheet according to one embodiment of the present invention, the resulting dried sheet-shaped product is compressed. The dried sheet-shaped product may be compressed using a press or rolls, for example. The surface pressure applied to the dried sheet-shaped product during compression is preferably 1 to 30 MPa, more preferably 1 to 20 MPa, and still more preferably 1 to 10 MPa. When compressing the dried sheet-shaped product using rolls, the above surface pressure can be applied by setting the roll gap during rolling to about 0.2 to 1.5 mm, for example.

In the method of producing a fluororesin gasket sheet according to one embodiment of the present invention, the dried sheet-shaped product is preferably compressed so that the resulting fluororesin sheet has a porosity of 13% or less, more preferably 10% or less, more preferably 8% or less, and still more preferably 6% or less. It is particularly preferable to compress the dried sheet-shaped product so that the resulting fluororesin sheet has as low a porosity as possible. A fluororesin sheet that exhibits excellent seal-tightness can be obtained by compressing the dried sheet-shaped product so that the resulting fluororesin sheet has a porosity of 13% or less. When regarding the seal-tightness as important, or regarding the balance between the stress relaxation properties and the seal-tightness as important, it is preferable to compress the dried sheet-shaped product so that the resulting fluororesin sheet has a porosity of 2 to 10%, and more preferably 4 to 8%.

In the method of producing a fluororesin gasket sheet according to one embodiment of the present invention, the porosity of the resulting fluororesin sheet can be controlled by adjusting the compression conditions. Specifically, the porosity of the fluororesin sheet can be controlled by adjusting the load applied to a press or rolls during compression, or adjusting the distance between a pair of dies of a press or the distance between a pair of rolls, or adjusting the die temperature or the roll temperature.

In the method of producing a fluororesin gasket sheet according to one embodiment of the present invention, the compressed sheet-shaped product is calcined. Specifically, the compressed sheet-shaped product is heated (sintered) at a temperature equal to or higher than the melting point of the fluororesin. The calcining temperature is determined depending on the type of fluororesin. The compressed sheet-shaped product is preferably calcined at 340 to 370°C. It is desirable to calcine the compressed sheet-shaped product while uniformly heating the entire compressed sheet-shaped product.

The fluororesin gasket sheet according to one embodiment of the present invention may be obtained by the method of producing a fluororesin gasket sheet according to one embodiment of the present invention, for example.

According to the method of producing a fluororesin gasket sheet according to one embodiment of the present invention, it is possible to conveniently produce a fluororesin gasket sheet that exhibits excellent high-temperature stress relaxation properties and sufficient seal-tightness even if the fluororesin content is less than 60 vol% (i.e., even if the inorganic filler content is relatively high), by forming a mixture that includes the fluororesin, the inorganic filler, and the processing aid into a sheet, and compressing the resulting sheet before calcining to control the porosity of the resulting fluororesin sheet.

A sheet gasket according to one embodiment of the present invention is described below.

The sheet gasket according to one embodiment of the present invention is obtained by processing the fluororesin gasket sheet according to one embodiment of the present invention.

The fluororesin sheet may be processed by punching or the like. A sheet gasket having an arbitrary shape can be obtained by punching the fluororesin gasket sheet according to one embodiment of the present invention, for example.

The components, the thickness, the properties (density and porosity), and the like of the sheet gasket according to one embodiment of the present invention are the same as those of the fluororesin gasket sheet according to one embodiment of the present invention.

The sheet gasket according to one embodiment of the present invention may be produced by producing a fluororesin sheet by the method according to one embodiment of the present invention, and punching the fluororesin sheet, for example.

The seal-tightness of the sheet gasket according to one embodiment of the present invention may be evaluated by determining the $N_2$ gas seal-tightness. The term "$N_2$ gas seal-tightness" used herein refers to a value obtained by clamping a punched sheet having the JIS 10K 25A flange standard size at a surface pressure of 35 MPa, and measuring the $N_2$ gas leakage amount by downward displacement of water when applying $N_2$ gas at an internal pressure of 0.98 MPa for 10 minutes.

According to the present invention, it is possible to provide a sheet gasket that exhibits excellent high-temperature stress relaxation properties and sufficient seal-tightness even if the fluororesin content in the fluororesin sheet is less than 60 vol% (i.e., even if the inorganic filler content is relatively high).

The sheet gasket according to one embodiment of the present invention may be used in a wide variety of fields such as petrochemical plants, industrial machines, automobiles, and household appliances.

The present invention is further described below by way of examples. Note that the present invention is not limited to the following examples.

Example 1

A PTFE "6-J" (manufactured by Dupont-Mitsui Fluorochemicals Ltd., melting point: 327°C, density: 2.2 g/cm³) was used as a fluororesin, and spherical aluminum oxide "A-42-2" (manufactured by Showa Denko K.K., average particle size: 5 μm, density: 3.9 g/cm³) was used as an inorganic filler. The materials were weighed in a ratio shown in Table 1 so that the total amount was 10 kg.

After the addition of Isopar G (manufactured by Exxon Mobil Corp., about 5-fold volume) (processing aid) to the mixture of PTFE and aluminum oxide, the components were mixed for 5 minutes using a mixer, filtered, and pressed to a length of about 700 mm, a width of 700 mm, and a thickness of 20 mm using a hand press. The resulting product was passed between two rolls (roll diameter: 610 mm, roll gap: 10 mm) at room temperature and a speed of 5 m/min (rolling). The roll gap was sequentially reduced to 5 mm and 3 mm, and then adjusted so that the thickness of the resulting product was 1.5 x {1 + (thickness before compression - thickness after compression) / thickness before compression)} mm taking account of the compression allowance after drying to obtain a sheet-shaped product.

The sheet-shaped product was allowed to dry at room temperature for 24 hours or more to remove the processing aid. The dried sheet-shaped product was passed (compressed) between two rolls (roll gap: 1.2 mm) at a speed of 5 m/min to obtain a compressed sheet-shaped product having a thickness of 1.5 mm. The compression rate ({(thickness before compression - thickness after compression) / thickness before compression} x 100) was 4%.

The resulting compressed sheet-shaped product was calcined in an electric furnace at 350°C for 3 hours to obtain a fluororesin sheet (thickness: 1.5 mm) having a composition shown in Table 1.

Examples 2 to 12

A fluororesin sheet (thickness: 1.5 mm) having a composition shown in Table 1 or 2 was produced in the same manner as in Example 1, except for changing the mixing ratio of PTFE and aluminum oxide as shown in Table 1 or 2, and changing the compression rate after drying as shown in Table 1 or 2.

Example 13 (Reference Example)

A fluororesin sheet (thickness: 1.5 mm) having a composition shown in Table 3 was produced in the same manner as in Example 1, except for using silica stone (manufactured by Maruesu Co., Ltd., #20, density: 2.7 g/cm³) as the inorganic filler instead of aluminum oxide "A-42-2" (manufactured by Showa Denko K.K.), weighing the materials in a ratio shown in Table 3 so that the total amount was 10 kg to obtain a mixture of PTFE and silica stone, and changing the compression rate after drying to 15%.

Example 14 (Reference Example)

A fluororesin sheet (thickness: 1.5 mm) having a composition shown in Table 3 was produced in the same manner as in Example 1, except for using NK300 clay (manufactured by Showa Chemical Co., Ltd., density: 2.6 g/cm³) as the inorganic filler instead of aluminum oxide "A-42-2" (manufactured by Showa Denko K.K.), weighing the materials in a ratio shown in Table 3 so that the total amount was 10 kg to obtain a mixture of PTFE and clay, and changing the compression rate after drying to 15%.

Example 15 (Reference Example)

A fluororesin sheet (thickness: 1.5 mm) having a composition shown in Table 3 was produced in the same manner as in Example 1, except for using barium sulfate (manufactured by Sakai Chemical Industry Co., Ltd., density: 4.5 g/cm³) as the inorganic filler instead of aluminum oxide "A-42-2" (manufactured by Showa Denko K.K.), weighing the materials in a ratio shown in Table 3 so that the total amount was 10 kg to obtain a mixture of PTFE and barium sulfate, and changing the compression rate after drying to 15%.

Example 16

A fluororesin sheet (thickness: 1.5 mm) having a composition shown in Table 3 was produced in the same manner as in Example 1, except for using the PTFE "6-J" (manufactured by Dupont-Mitsui Fluorochemicals Ltd., melting point: 327°C, density: 2.2 g/cm$^3$) and a modified PTFE "62-J" (manufactured by Dupont-Mitsui Fluorochemicals Ltd., melting point: 325 to 326°C, density: 2.2 g/cm$^3$) as the fluororesin, changing the mixing ratio of the fluororesin and aluminum oxide as shown in Table 3, and changing the compression rate after drying to 15%.

Example 17

A fluororesin sheet (thickness: 1.5 mm) having a composition shown in Table 3 was produced in the same manner as in Example 1, except for using a modified PTFE "62-J" (manufactured by Dupont-Mitsui Fluorochemicals Ltd., melting point: 325 to 326°C, density: 2.2 g/cm$^3$) as the fluororesin instead of the PTFE "6-J" (manufactured by Dupont-Mitsui Fluorochemicals Ltd., melting point: 327°C, density: 2.2 g/cm$^3$), changing the mixing ratio of the fluororesin and aluminum oxide as shown in Table 3, and changing the compression rate after drying to 15%.

Comparative Examples 1 to 3

A fluororesin sheet (thickness: 1.5 mm) having a composition shown in Table 4 was produced in the same manner as in Example 1, except for changing the mixing ratio of PTFE and aluminum oxide as shown in Table 4, and calcining the dried sheet-shaped product without compressing the sheet-shaped product.

The measured sheet density, the porosity, the tensile strength, the stress relaxation, and the seal-tightness of the fluororesin sheets obtained in Examples 1 to 17 and Comparative Examples 1 to 3 were measured by the above methods. The results are shown in Tables 1 to 4. Note that the properties of the fluororesin sheet are considered to be identical with the properties of a sheet gasket obtained by processing the fluororesin sheet.

The fluororesin sheets obtained in Examples 1 to 17 and Comparative Examples 1 to 3 were punched to have the JIS 10K 25A flange standard size to obtain sheet gaskets. The seal-tightness of each sheet gasket was evaluated by determining the N$_2$ gas seal-tightness. The measurement results are shown in Tables 1 to 4 corresponding to the fluororesin sheet used to produce each seal gasket.

TABLE 1

| | | | Example 1 | Example 2 | Example 3 | Example 4 | Example 5 | Example 6 | Example 7 |
|---|---|---|---|---|---|---|---|---|---|
| Composition (vol%) | Fluororesin | PTFE | 55 | 54 | 52 | 52 | 52 | 52 | 52 |
| | | Modified PTFE | - | - | - | - | - | - | - |
| | Filler | Aluminum oxide | 45 | 46 | 48 | 48 | 48 | 48 | 48 |
| | | Silica stone | - | - | - | - | - | - | - |
| | | Clay | - | - | - | - | - | - | - |
| | | Barium sulfate | - | - | - | - | - | - | - |
| Production condition | Compression rate (%) | | 4 | 15 | 4 | 10 | 15 | 25 | 40 |
| Properties | Density (g/cm$^3$) | | 2.78 | 2.85 | 2.62 | 2.74 | 2.77 | 2.85 | 2.96 |
| | Porosity (%) | | 6.2 | 8.6 | 13.0 | 9.2 | 8.2 | 5.5 | 1.9 |
| | Tensile strength (MPa) | | 9.6 | 6.3 | 8.2 | 8.3 | 8.5 | 8.6 | 8.8 |
| | Stress relaxation (%) | | 17 | 16 | 18 | 18 | 16 | 15 | 14 |
| | Seal-tightness (cm$^3$/min) | | 0.0 | 0.0 | 0.9 | 0.3 | 0.0 | 0.0 | 0.0 |

TABLE2

|  |  |  | Example 8 | Example 9 | Example 10 | Example 11 | Example 12 |
|---|---|---|---|---|---|---|---|
| Composition (vol%) | Fluororesin | PTFE | 50 | 48 | 45 | 45 | 43 |
|  |  | Modified PTFE | - | - | - | - | - |
|  | Filler | Aluminum oxide | 50 | 52 | 55 | 55 | 57 |
|  |  | Silica stone | - | - | - | - | - |
|  |  | Clay | - | - | - | - | - |
|  |  | Barium sulfate | - | - | - | - | - |
| Production condition | Compression rate (%) |  | 25 | 25 | 25 | 30 | 30 |
| Properties | Density (g/cm$^3$) |  | 2.83 | 2.84 | 2.83 | 2.90 | 2.86 |
|  | Porosity (%) |  | 7.2 | 7.9 | 9.7 | 7.5 | 9.8 |
|  | Tensile strength (MPa) |  | 7.7 | 6 | 5.6 | 9.9 | 4.8 |
|  | Stress relaxation (%) |  | 14 | 14 | 13 | 13 | 12 |
|  | Seal-tightness (cm$^3$/min) |  | 0.2 | 0.0 | 0.1 | 0.0 | 0.2 |

TABLE 3

|  |  |  | Example 13 | Example 14 | Example 15 | Example 16 | Example 17 |
|---|---|---|---|---|---|---|---|
| Composition (vol%) | Fluororesin | PTFE | 52 | 52 | 52 | 32 | - |
|  |  | Modified PTFE | - | - | - | 20 | 52 |
|  | Filler | Aluminum oxide | - | - | - | 48 | 48 |
|  |  | Silica stone | 48 |  | - | - | - |
|  |  | Clay | - | 48 | - | - | - |
|  |  | Barium sulfate | - | - | 48 | - | - |
| Production condition | Compression rate (%) |  | 15 | 15 | 15 | 15 | 15 |
| Properties | Density (glcm$^3$) |  | 2.27 | 2.22 | 3.06 | 2.80 | 2.73 |
|  | Porosity (%) |  | 7.0 | 7.2 | 7.4 | 7.2 | 9.5 |
|  | Tensile strength (MPa) |  | 7.9 | 7.8 | 6.5 | 9.0 | 9.3 |
|  | Stress relaxation (%) |  | 16 | 15 | 16 | 14 | 13 |
|  | Seal-tightness (cm$^3$/min) |  | 0.0 | 0.0 | 0.1 | 0.0 | 0.1 |

TABLE4

| | | | Comparative Example 1 | Comparative Example 2 | Comparative Example 3 |
|---|---|---|---|---|---|
| Composition (vol%) | Fluororesin | PTFE | 60 | 50 | 52 |
| | | Modified PTFE | - | - | - |
| | Filler | Aluminum oxide | 40 | 50 | 48 |
| | | Silica stone | - | - | - |
| | | Clay | - | - | - |
| | | Barium sulfate | - | - | - |
| Production condition | Compression rate (%) | | - | - | - |
| Properties | Density (glcm$^3$) | | 2.70 | 2.40 | 2.61 |
| | Porosity (%) | | 6.3 | 21.3 | 13.5 |
| | Tensile strength (MPa) | | 21 | 6 | 8.1 |
| | Stress relaxation (%) | | 24 | 23 | 20 |
| | Seal-tightness (cm$^3$/min) | | 0.0 | 10.0 or more | 2.0 |

As is clear from the results shown in Tables 1 to3, the porosity of the fluororesin sheets obtained in Examples 1 to 17 could be controlled to 13% or less by rolling, drying, compressing, and then calcining the mixture of the fluororesin, the inorganic filler, and the processing aid. The fluororesin sheets obtained in Examples 1 to 17 exhibited excellent stress relaxation properties with a stress relaxation of 12 to 18% even if the fluororesin content was less than 60 vol% (i.e., even if the inorganic filler content was relatively high).

On the other hand, as is shown in Table4, fluororesin sheets obtained in Comparative Examples 1 to 3, exhibiting inferior stress relaxation properties with a stress relaxation of 20 to 24% were obtained since the mixture was rolled, dried, and then calcined without compressing the mixture.

As is clear from the results-shown in Tables 1 to 3, the sheet gaskets produced using the fluororesin sheets obtained in Examples 1 to 17 exhibited excellent $N_2$ gas seal-tightness with an $N_2$ gas leakage amount of 0.0 to 0.9 cm$^3$/min. On the other hand, as is shown in Table4, the sheet gaskets produced using the fluororesin sheets obtained in Comparative Examples 2 and 3 exhibited inferior $N_2$ gas seal-tightness with an $N_2$ gas leakage amount of 10 cm$^3$/min or more and 2.0 cm$^3$/min, respectively.

According to the present invention, it is possible to provide a fluororesin gasket sheet that exhibits excellent high-temperature stress relaxation properties and sufficient seal-tightness even if the fluororesin content is less than 60 vol% (i.e., even if the inorganic filler content is relatively high), a method of producing the fluororesin gasket sheet, and a sheet gasket obtained by processing the fluororesin sheet.

**Claims**

1.    A fluororesin gasket sheet comprising a fluororesin and an inorganic filler, the inorganic filler being aluminum oxide, and the fluororesin gasket sheet having a fluororesin content of 43 to 55 vol%, an inorganic filler content of 45 to 57 vol%, and a porosity of 13% or less.

2.    A method of producing a fluororesin gasket sheet comprising forming a mixture that includes a fluororesin, an inorganic filler, and a processing aid into a sheet-shaped product, and drying, compressing, and then calcining the sheet-shaped product.

3.    A sheet gasket obtained by processing the fluororesin gasket sheet according to claim 1.

**Patentansprüche**

1. Fluorharzdichtungsfolie, umfassend ein Fluorharz und ein anorganischen Füllstoff, wobei der anorganische Füllstoff Aluminiumoxid ist, und die Fluorharzdichtungsfolie einen Fluorharzgehalt von 43 bis 55 Vol.-%, einen anorganischen Füllstoffgehalt von 45 bis 57 Vol.-%, und eine Porosität von 13% oder geringer aufweist.

2. Verfahren zur Herstellung einer Fluorharzdichtungsfolie, umfassend das Bilden eines Gemisches, das ein Fluorharz, einen anorganischen Füllstoff und ein Verarbeitungshilfsmittel beinhaltet, zu einem Folien-förmigen Produkt, und Trocknung, Verdichtung, und anschließend Kalzinierung des Folien-förmigen Produktes.

3. Dichtungsfolie, erhalten durch Verarbeitung der Fluorharzdichtungsfolie nach Anspruch 1.


**Revendications**

1. Feuille de fluororésine pour joint, comprenant une fluororésine et une charge inorganique, la charge inorganique étant l'oxyde d'aluminium, et la feuille de fluororésine pour joint ayant une teneur en fluororésine allant de 43 à 55% en volume, une teneur en charge inorganique allant de 45 à 57% en volume, et une porosité de 13% ou moins.

2. Procédé de production d'une feuille de fluororésine pour joint comprenant la formation d'un mélange qui comprend une fluororésine, une charge inorganique, et un auxiliaire de traitement en un produit en forme de feuille, et le séchage, la compression, puis la calcination du produit en forme de feuille.

3. Joint en feuille obtenu par traitement de la feuille de fluororésine pour joint selon la revendication 1.

**REFERENCES CITED IN THE DESCRIPTION**

**Patent documents cited in the description**

- JP 2008007607 A
- EP 2168998 A1
- EP 1584645 A1